Europäisches Patentamt

European Patent Office

Office européen des brevets

(11) Veröffentlichungsnummer: **0 201 451**
A2

(12) # EUROPÄISCHE PATENTANMELDUNG

(21) Anmeldenummer: **86730055.0**

(51) Int. Cl.⁴: **H 01 R 23/10**

(22) Anmeldetag: **27.03.86**

(30) Priorität: **09.05.85 DE 8514094 U**

(71) Anmelder: **FRITZ KUKE KG, Am Juliusturm 67-73, D-1000 Berlin 20 (DE)**

(72) Erfinder: **Überlée, Sylvia Charlotte, Hakenfelder Strasse 8c, D-1000 Berlin 20 (DE)**
Erfinder: **Düning, Rüdiger, Maulbeerallee 22, D-1000 Berlin 22 (DE)**

(43) Veröffentlichungstag der Anmeldung: **12.11.86**
**Patentblatt 86/46**

(74) Vertreter: **Bergmann, Jürgen, Dipl.-Ing. et al, Patentanwälte PFENNING, MEINIG & PARTNER Kurfürstendamm 170, D-1000 Berlin 15 (DE)**

(84) Benannte Vertragsstaaten: **AT BE CH DE FR LI LU NL**

(54) **Apparat zur leitungsgebundenen elektrischen Nachrichtenübertragung.**

(57) Es wird ein Apparat zur leitungsgebundenen elektrischen Nachrichtenübertragung, insbesondere Fernsprechapparat, mit einer Anschlussbuchse für eine externe Leitung und mit der Anschlussbuchse verbundenen, apparateintern fest angeordneten Kontakten vorgeschlagen. Zur Verbindung der in der Anschlussbuchse fest angeordneten Buchsenkontakte mit den apparateintern festen Kontakten ist eine flexible Verbindungsleitung (7) vorgesehen, deren eines Ende mit den Buchsenkontakten verbunden ist und deren anderes Ende einen Stecker (8) trägt, der mit festen Kontakten verbunden werden kann.

## Apparat zur leitungsgebundenen elektrischen Nachrichtenübertragung

Die Neuerung betrifft einen Apparat zur leitungsgebundenen elektrischen Nachrichtenübertragung mit einer Anschlußbuchse für eine externe Leitung und mit der Anschlußbuchse verbundenen apparat-intern fest angeordneten Kontakten.

Bei derartigen bekannten Anschlußbuchsen stehen die Buchsenkontakte und die geräteinternen Kontakte üblicherweise in einer gegenseitigen festen räumlichen Zuordnung. Es ist jedoch insbesondere bei dichter Anordnung der einzelnen Bauelemente innerhalb des Gerätes schwierig, die Anschlußbuchsenkontakte und die geräteseitigen Kontakte in einer solchen räumlichen Beziehung zueinander auszubilden, daß sie direkt miteinander verbindbar sind.

Es ist daher die Aufgabe der vorliegenden
Neuerung, einen Apparat der genannten Art
zu schaffen, bei dem das Erfordernis einer
vorgegebenen räumlichen Zuordnung zwischen
den Buchsenkontakten und den geräteseitigen
Kontakten nicht besteht.

Diese Aufgabe wird neuerungsgemäß durch das
im kennzeichnenden Teil des Anspruchs 1 angegegebene Merkmal gelöst. Vorteilhafte Ausbildungen des neuerungsgemäßen Apparates
ergeben sich aus den Unteransprüchen.

Die Neuerung zeichnet sich dadurch aus, daß
zwischen in der Anschlußbuchse fest angeordneten Buchsenkontakten und einem Stecker
zur Verbindung mit den apparateinternen
Kontakten eine flexible Verbindungsleitung
angeordnet ist. Hierbei ist vorzugsweise
zwischen den Buchsenkontakten und der Verbindungsleitung eine Leiterplatte angeordnet.
Die Anschlußbuchse weist vorteilhaft ein
Gehäuse auf, das in eine Aussparung des
Gerätegehäuses eingesetzt und in dieser
durch Rastmittel gehalten ist.

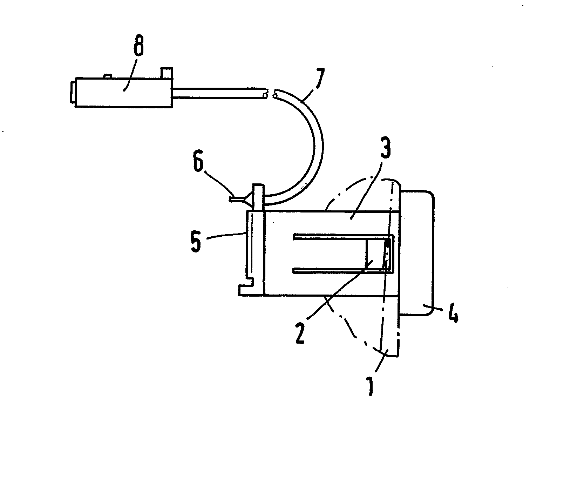

Die Neuerung wird im folgenden anhand eines
in der Figur dargestellten Ausführungsbeispiels
näher erläutert. Diese zeigt in der Seitenansicht eine Anschlußbuchse mit einem mit
dieser über eine Leitung verbundenen Stecker.
Die Anschlußbuchse ist in eine Aussparung
eines Gehäuses 1 eines elektrischen Apparates,
beispielsweise eines Fernsprechapparates,
eingesetzt und wird in dieser durch geeignete
Rastmittel 2 am Gehäuse 1 und am Gehäuse 3 der Anschlußbuchse lösbar gehalten. Aus dem Gehäuse 1 ragt ein mit der Hand oder einem Werkzeug zu ergreifenden Ansatz 4 der Anschlußbuchse heraus, mit dessen Hilfe die Anschlußbuchse eingesetzt und herausgenommen werden kann. Zur Anschlußbuchse wird eine nicht dargestellte, externe Leitung geführt, die mit elektrischen Bauteilen innerhalb des Apparates verbunden werden soll.

Am inneren Ende der eingesetzten Anschlußbuchse befindet sich eine Leiterplatte 5, deren Leiterbahnen mit der externen Leitung verbunden sind. Im Gehäuse 3 der Anschlußbuchse können sich zur Herstellung dieser Verbindung Blattfederkontakte befinden; es kann jedoch auch eine feste Verbindung bzw. Verdrahtung zwischen der externen Leitung und der Leiterplatte 5 vorgesehen sein. Die Leiterbahnen der Leiterplatte 5 führen zu Anschlußpunkten 6, an denen sie beispielsweise durch Verlöten fest mit den Adern einer flexiblen Leitung 7 verbunden sind. Das andere Ende der Leitung 7 ist mit einem Stecker 8 abgeschlossen. Die Leitung 7 besitzt eine ausreichende Länge, um den Stecker 8 an jeder gewünschten Stelle i merhalb des Gehäuses 1 positionieren zu können. Die mit dem Stecker 8 koppelbare Steckbuchse, an die die mit der externen Leitung zu verbindenden apparateseitigen Bauteile angeschlossen sind, kann sich daher an einer beliebigen, durch die zweckmäßigste Anordnung der Apparateteile bestimmten Stellen befinden. Auch für die Aufnahme der Anschlußbuchse im Gehäuse 1 kann unabhängig von der Lage der gerätefesten Steckbuchse die nach anderen Kriterien, beispielsweise nach geschmacklichen Gesichtspunkten, geeigneteste Stelle gewählt werden.

Patentansprüche

1. Apparat zur leitungsgebundenen elektrischen Nachrichtenübertragung mit einer Anschlußbuchse für eine externe Leitung und mit der Anschlußbuchse verbundenen apparateintern fest angeordneten Kontakten, d a d u r c h   g e k e n n z e i c h n e t , daß zwischen in der Anschlußbuchse fest angeordneten Buchsenkontakten und einem Stecker (8) zur Verbindung mit den apparateinternen Kontakten eine flexible Verbindungsleitung (7) angeordnet ist.

2. Apparat nach Anspruch 1, dadurch gekennzeichnet, daß zwischen den Buchsenkontakten und der Verbindungsleitung (7) eine Leiterplatte (5) angeordenet ist.

3. Apparat nach Anspruch 1 oder 2, dadurch gekennzeichnet, daß die Buchsenkontakte aus Kontaktfedern gebildet sind.

4. Apparat nach einem der Ansprüche 1 bis 3, dadurch gekennzeichnet, daß die Anschlußbuchse ein Gehäuse (3) aufweist, das in einer Aussparung des Apparategehäuses (1) eingesetzt und in dieser durch Rastmittel (2) gehalten ist.